# EUROPÄISCHE PATENTSCHRIFT

(11) **EP 3 921 375 B1**
(45) Veröffentlichungstag und Bekanntmachung des Hinweises auf die Patenterteilung: **12.04.2023**
(21) Anmeldenummer: 19703707.0
(22) Anmeldetag: 06.02.2019
(51) Int. Cl.: C09D 5/02, C09D 5/14, C09D 183/04, C09G 3/00

(54) **GLEITMITTEL**
GLIDE AGENT
AGENT DE GLISSEMENT

(43) Veröffentlichungstag der Anmeldung: 15.12.2021
(73) Patentinhaber: GIGAGLIDE Surface Technologies GmbH, 4063 Hörsching (AT)
(72) Erfinder: KUMMERER, Robert, 5400 Hallein (AT)
(74) Vertreter: KLIMENT & HENHAPEL
(86) Internationale Anmeldenummer: PCT/EP2019/052849
(87) Internationale Veröffentlichungsnummer: WO 2020/160762

(56) Entgegenhaltungen:
- EP-A1- 0 527 286
- WO-A1-2013/120737
- CN-A- 104 530 971
- DE-U1-202018 102 849
- US-A- 3 770 633
- US-A- 4 828 885

## Beschreibung

### GEBIET DER ERFINDUNG

Die Erfindung betrifft ein Gleitmittel zur Erhöhung der Gleitfähigkeit eines Sportgerätes, insbesondere eines Wintersportgerätes.

Außerdem betrifft die Erfindung ein Verfahren zur Herstellung des erfindungsgemäßen Gleitmittels.

### STAND DER TECHNIK

Gleitmittel zur Erhöhung der Gleitfähigkeit eines Sportgerätes sind insbesondere aus dem Wintersport bekannt. Um die Reibung zwischen einer Gleitfläche eines Wintersportgerätes, beispielsweise von Schiern, Snowboards, oder Kurzschi, und einer Schneepiste zu reduzieren, wird die Gleitfläche des jeweiligen Wintersportgerätes für gewöhnlich mit einer gleichmäßig dünnen Schicht aus Schiwachs (oder Wachs) überzogen.

Dazu ist es in der Regel notwendig, das Wintersportgerät in einer eigens dafür vorgesehenen Vorrichtung zu fixieren, das Wachs zu erhitzen und auf die Gleitfläche aufzutragen, wobei die Temperatur des Wachses dabei in einem bestimmten Bereich gehalten werden muss. Anschließend muss das Wachs möglichst gleichmäßig über die Gleitfläche verteilt werden.

Alternativ kann das Schiwachs auch auf die Gleitfläche aufgerieben werden, was zwar einen geringeren Materialverbrauch mit sich bringt, aber auch ein genaueres Arbeiten erfordert, um eine möglichst gleichmäßige Wachsschicht herzustellen.

Nach ausreichender Abkühlung und Aushärtung der Wachsschicht, was bei Raumtemperatur in der Regel mindestens 30 Minuten dauert, muss überschüssiges Wachs abgetragen werden. Dazu wird eine eigens dafür vorgesehene Abziehklinge so oft über das abgekühlte Wachs geführt, bis sämtliches überschüssiges Wachs entfernt wurde.

Meist folgen nach dem Aufbringen der ersten Wachsschicht (Grundschicht) weitere Schichten aus fluorhaltigen Wachsen, welche anhand derselben Arbeitsschritte wie die Grundschicht auf die Gleitfläche des Wintersportgerätes aufgetragen werden müssen.

Schließlich muss die Gleitfläche mit einer Bürste mehrere Male ausgebürstet und mit einem weichen, beispielsweise Fleece- oder Baumwolltuch poliert werden.

Das beschriebene Wachsen der Gleitfläche ist somit sehr aufwändig, weshalb eine entsprechende Behandlung der Gleitfläche meist Profis überlassen werden muss. Üblicherweise ist das Wachsen der letzte Arbeitsschritt einer umfassenden Aufbereitung des Wintersportgerätes, bei der zuvor auch Kanten der Gleitfläche geschliffen werden.

Das beschriebene Procedere kommt aber nicht nur bei Wintersportgeräten zum Einsatz. Auch bei Sommerwettbewerben im Schispringen, bei denen mit Matten belegte Schanzen zum Einsatz kommen, ist es notwendig, die Gleitfähigkeit der dabei eingesetzten Schi entsprechend zu optimieren. Der Aufsprungbereich solcher Mattenschanzen ist nämlich mit Kunststoffmatten ausgelegt, welche befeuchtet werden und dadurch ähnliche Gleiteigenschaften aufweisen wie Schnee.

Auch in anderen Gebieten der Technik kann der Einsatz von Gleitmitteln vorteilhaft sein, etwa in der Schifffahrt, wo durch Aufbringen von Wachs auf eine Schiffsrumpf-Oberfläche die Reibung zwischen dem Schiffsrumpf und dem Wasser bzw. der Umgebungsluft reduziert werden soll.

### AUFGABE DER ERFINDUNG

Es ist eine Aufgabe der Erfindung, die Nachteile des Standes der Technik zu überwinden und ein Gleitmittel vorzuschlagen, dessen bestimmungsgemäße Anwendung einfacher und zeitsparender geschehen kann als bei bekannten Gleitmitteln.

Insbesondere soll die bestimmungsgemäße Anwendung des erfindungsgemäßen Gleitmittels ohne Abziehen und Polieren der Gleitfläche auskommen.

Weitere Aufgaben, die die Erfindung lösen soll, gehen aus der Beschreibung hervor.

### DARSTELLUNG DER ERFINDUNG

Eine Aufgabe der Erfindung wird durch ein erfindungsgemäßes Gleitmittel zur Erhöhung der Gleitfähigkeit eines Sportgerätes, insbesondere eines Wintersportgerätes, umfassend
- eine wässrige Lösung mit
   - einer wässrigen Silikon-Emulsion,
   - einer von der wässrigen Silikon-Emulsion verschiedenen Emulsion eines Polydimethylsiloxans, sowie mit
   - einer wasserbasierten Formulierung mit Methylisothiazolinon und/oder Benzisothiazolinon entsprechend Anspruch 1 gelöst, wobei eine mittlere Teilchengröße der wässrigen Silikon-Emulsion weniger als 100 nm beträgt.

Durch den Einsatz dieser wässrigen Lösung in dem erfindungsgemäßen Gleitmittel wird es möglich, das Gleitmittel auf eine Gleitfläche von Sportgeräten, insbesondere Wintersportgeräten, beispielsweise auf Laufflächen von Schiern, Snowboards, Snowblades oder Bigfoot, aufzusprühen. Somit kann das Gleitmittel mühelos in gleichmäßiger Weise auf die Gleitfläche des Sportgerätes aufgebracht werden; ein anschließendes Ausbürsten und Polieren der Gleitfläche kann dabei entfallen. Dabei ist das erfindungsgemäße Gleitmittel aufgrund der Viskosität der wässrigen Lösung besonders gut für das Aufbringen mittels Aufsprühen geeignet. Das Gleitmittel benötigt nur eine geringe Einwirkzeit, nämlich einige Sekunden, um der damit behandelten Gleitfläche eine wesentlich verbesserte Gleitfähigkeit zu verleihen.

Die wässrige Silikon-Emulsion, welche in extrem feinteiliger Form mit einer Teilchen- bzw. Tröpfchengröße im Nanometerbereich vorliegen kann, ist problemlos mit Wasser verdünnbar oder in, vorzugsweise kaltgerührte, wässrige Formulierungen eingearbeitbar. Diese Silikon-Emulsion dient der Imprägnierung und Hydrophobierung der Gleitfläche. Die Emulsion eines Polydimethylsiloxans verbessert die Gleiteigenschaften der Gleitfläche durch seine Funktion als Gleitadditiv und Fließhilfsmittel, welche insbesondere in wasserbasierten Formulierungen zum Vorschein treten, erheblich. Schließlich resultiert das Vorhandensein der wasserbasierten Formulierung mit Methylisothiazolinon (2-Methyl-4-isothiazolin-3-on) und/oder Benzisothiazolinon (1,2-Benzothiazol-3-on) in der wässrigen Lösungen in einer längeren Haltbarkeit des Gleitmittels; dies wird durch die mikrobizide und fungizide Wirkung von Methylisothiazolinon und Benzisothiazolinon erreicht. Insgesamt kann durch das erfindungsgemäße Gleitmittel überraschenderweise auch eine viel höhere Gleitfähigkeit als mit bekannten Gleitmitteln erzielt werden.

Das erfindungsgemäße Gleitmittel bzw. die wässrige Lösung kann auch Glykole und/oder Vernetzungsmittel umfassen.

Aufgrund des Gefrierpunktes der wässrigen Lösung, welcher bei einer bevorzugten Ausführungsform des erfindungsgemäßen Gleitmittels bei -5°C oder darüber liegt, ist das Gleitmittel besonders gut für die Anwendung in einer Werkstatt geeignet, da die dort vorherrschenden Temperaturen stets über diesem Wert liegen.

Bei einer anderen bevorzugten Ausführungsform des erfindungsgemäßen Gleitmittels ist vorgesehen, dass der Gefrierpunkt der wässrigen Lösung im Bereich von -1°C bis 0°C, vorzugsweise von -0,5°C bis 0°C, besonders bevorzugt bei 0°C, liegt. Die Verarbeitbarkeit des Gleitmittels bei Temperaturen, wie sie üblicherweise in einer Werkstatt deutlich höher vorliegen, kann hierdurch nochmals verbessert werden, was an der für die Verarbeitung optimalen Viskosität des Gleitmittels bei solchen Temperaturen liegt.

Bei der Erfindung ist es vorgesehen, dass eine mittlere Teilchengröße der wässrigen Silikon-Emulsion weniger als 100 nm, vorzugsweise weniger als 50 nm, beträgt.

Die Mittelung der Teilchengröße erfolgt auf Basis des des arithmetischen Mittels. Die Teilchengröße bzw. der Durchmesser der Teilchen wird mittels dynamischer Lichtstreuung (DLS) bestimmt.

Dadurch kann eine noch gleichmäßigere Beschichtung der Gleitfläche erzielt werden, wodurch die Gleiteigenschaften weiter verbessert werden können. Außerdem kann durch diese Maßnahme die Stabilität der wässrigen Lösung, insbesondere der Silikon-Emulsion, weiter erhöht werden.

Um die Gleitfähigkeit noch weiter zu erhöhen, ist es bei einer anderen bevorzugten Ausführungsform der Erfindung vorgesehen, dass eine mittlere Teilchengröße der wässrigen Silikon-Emulsion im Bereich von 15 nm bis 35 nm, vorzugsweise von 20 nm bis 30 nm liegt, oder besonders bevorzugt 25 nm beträgt. Dadurch kann überraschenderweise die erforderliche Einwirkzeit des Gleitmittels weiter reduziert werden.

Bei einer weiteren bevorzugten Ausführungsform des Gleitmittels ist es vorgesehen, dass das Polydimethylsiloxan in hochmolekularer Form in der Polydimethylsiloxan-Emulsion vorliegt.

Dadurch wird dem Gleitmittel eine für das Aufsprühen besonders günstige Viskosität und der mit dem Gleitmittel behandelten Gleitfläche überraschenderweise eine überaus gute Gleitfähigkeit verliehen. Zudem kann eine noch gleichmäßigere Beschichtung der Gleitfläche erzielt werden.

Um die Gesundheit des Anwenders bei der bestimmungsgemäßen Anwendung nicht zu gefährden, ist es bei einer weiteren bevorzugten Ausführungsform vorgesehen, dass das Gleitmittel frei von Glykolen ist.

Ein Nachteil einer wie eingangs beschrieben gewachsten Gleitfläche besteht darin, dass Schmutzpartikel leicht an der Wachsschicht anhaften können; nach einer gewissen Laufstrecke kann beispielsweise ein gewachster Schi dadurch langsamer werden als ein ungewachster.

Eine bevorzugte Ausführungsform des erfindungsgemäßen Gleitmittels vermeidet diesen Nachteil, indem das Gleitmittel dieser Ausführungsform frei von wachshaltigen Substanzen, vorzugsweise frei von jeglichen Erdölprodukten, ist; aufgrund der erfindungsgemäß zum Einsatz kommenden wässrigen Lösung verleiht das Gleitmittel der Gleitfläche aber auch ohne den Einsatz wachshaltiger Substanzen bzw. von Erdölprodukten eine verbesserte Gleitfähigkeit.

Fluorcarbone gelten als klimarelevant und haben aufgrund ihrer sehr langen mittleren Verweilzeit in der Atmosphäre sehr hohe Treibhauspotentiale. Da dem erfindungsgemäßen Gleitmittel die Funktionalität der Hydrophobierung der Gleitfläche bereits durch das Vorhandensein der Silikon-Emulsion verliehen wird, kommt das erfindungsgemäße Gleitmittel ohne jegliche Fluorcarbone aus.

Dementsprechend ist es bei einer anderen bevorzugten Ausführungsform des erfindungsgemäßen Gleitmittels vorgesehen, dass das Gleitmittel frei von Fluorcarbonen ist.

Eine weitere bevorzugte Ausführungsform des erfindungsgemäßen Gleitmittels ist frei von Paraffin.

Dies ist vorteilhaft, da das Vorhandensein einer nicht unwesentlichen Menge an Paraffin im Gleitmittel eine Nachbehandlung der Gleitfläche erfordern würde. Insbesondere müsste die Gleitfläche abgezogen und poliert werden, was bei Anwendung des erfindungsgemäßen Gleitmittels aber unterbleiben kann.

Um die Herstellung des erfindungsgemäßen Gleitmittels möglichst einfach und kostengünstig zu gestalten, ist es bei einer weiteren bevorzugten Ausführungsform der Erfindung vorgesehen, dass zumindest 50 Gew.%, vorzugsweise zumindest 85 Gew.%, der wässrigen Lösung aus Wasser bestehen.

Eine besonders hydrophobe Gleitfläche kann durch bestimmungsgemäße Anwendung einer bevorzugten Ausführungsform des erfindungsgemäßen Gleitmittels erzielt werden, in welcher zumindest 5 Gew.% der wässrigen Lösung aus der wässrigen Silikon-Emulsion bestehen.

Die Gleiteigenschaften einer mit dem erfindungsgemäßen Gleitmittel behandelten Gleitfläche können weiter optimiert werden, indem zumindest 1 Gew.% der wässrigen Lösung aus der Emulsion eines Polydimethylsiloxans bestehen, wie es bei einer anderen bevorzugten Ausführungsform auch der Fall ist.

Bei einer weiteren bevorzugten Ausführungsform der Erfindung ist es vorgesehen, dass zumindest 0,1 Gew.% der wässrigen Lösung aus der wasserbasierten Formulierung mit Methylisothiazolinon und/oder Benzisothiazolinon bestehen.

Dadurch kann die Haltbarkeit der Beschichtung der Gleitfläche erhöht und diese zugleich vor Verunreinigung geschützt werden.

Optimale Ergebnisse - sowohl hinsichtlich einer erhöhten Gleitfähigkeit, als auch in Hinblick auf eine besonders einfache Anwendung - werden mit einer weiteren bevorzugten Ausführungsform des erfindungsgemäßen Gleitmittels erzielt, bei welcher Ausführungsform
- zwischen 84,8 Gew.% und 88,8 Gew.%, vorzugsweise zwischen 85,8 Gew.% und 87,8 Gew.%, besonders bevorzugt zwischen 86,3 Gew.% und 87,3 Gew.%, insbesondere 86,8 Gew.%, der wässrigen Lösung aus Wasser,
- zwischen 6 Gew.% und 10 Gew.%, vorzugsweise zwischen 7 Gew.% und 9 Gew.%, besonders bevorzugt zwischen 7,5 Gew.% und 8,5 Gew.%, insbesondere 8 Gew.%, der wässrigen Lösung aus der wässrigen Silikon-Emulsion,
- zwischen 1 Gew.% und 5 Gew.%, vorzugsweise zwischen 2 Gew.% und 4 Gew.%, besonders bevorzugt zwischen 2,5 Gew.% und 3,5 Gew.%, insbesondere 3 Gew.%, der wässrigen Lösung aus der Emulsion eines Polydimethylsiloxans, und
- zwischen 0,01 Gew.% und 1 Gew.%, vorzugsweise zwischen 0,05 Gew.% und 0,5 Gew.%, besonders bevorzugt zwischen 0,1 Gew.% und 0,3 Gew.%, insbesondere 0,2 Gew.%, der wässrigen Lösung aus der wasserbasierten Formulierung mit Methylisothiazolinon und/oder Benzisothiazolinon bestehen.

Offenbart wird ebenfalls ein Verfahren zur Herstellung des erfindungsgemäßen Gleitmittels, das die folgenden Verfahrensschritte umfasst:
Herstellen einer wässrigen Lösung durch
a) Vorlegen von Wasser in einem Behältnis,
b) Zugeben einer wässrigen Silikon-Emulsion,
c) Zugeben einer Emulsion eines Polydimethylsiloxans,
d) Zugeben einer wasserbasierten Formulierung mit Methylisothiazolinon und/oder Benzisothiazolinon,
e) langsames Rühren der wässrigen Lösung für zumindest 30 Minuten, vorzugsweise zumindest 50 Minuten, besonders bevorzugt etwa 1 Stunde.

Die Schritte b), c) und d) können in beliebiger Reihenfolge durchgeführt werden.

### WEGE ZUR AUSFÜHRUNG DER ERFINDUNG

Nachfolgend wird die Erfindung anhand von Ausführungsbeispielen näher erläutert. Das Gleitmittel dieser Ausführungsbeispiele kann auf als Gleitflächen dienende Laufflächen von Sportgeräten jeder Art, also beispielsweise auf Schi, Snowboards, Kurzschi und dergleichen, aufgesprüht werden.

Das erfindungsgemäße Gleitmittel kann aber auch in anderen Gebieten der Technik zum Einsatz kommen, wo es gilt, Reibungseffekte zu minimieren. Dies kann beispielsweise in der Schiff- oder Luftfahrt der Fall sein, wo Reibungseffekte insbesondere zu einem erhöhten Kraftstoffverbrauch führen können.

In einem ersten Ausführungsbeispiel umfasst das Gleitmittel zur Erhöhung der Gleitfähigkeit eines Sportgerätes, insbesondere eines Wintersportgerätes, eine wässrige Lösung, welche wässrige Lösung wiederum eine wässrige Silikon-Emulsion, eine Emulsion eines Polydimethylsiloxans, sowie eine wasserbasierte Formulierung mit Methylisothiazolinon und Benzisothiazolinon umfasst.

Dabei bestehen zwischen 86,3 Gew.% und 87,3 Gew.% der wässrigen Lösung aus Wasser, zwischen 7,5 Gew.% und 8,5 Gew.% der wässrigen Lösung aus der wässrigen Silikon-Emulsion, zwischen 2,5 Gew.% und 3,5 Gew.% der wässrigen Lösung aus der Emulsion eines Polydimethylsiloxans, und zwischen 0,1 Gew.% und 0,3 Gew.% der wässrigen Lösung aus der wasserbasierten Formulierung mit Methylisothiazolinon und Benzisothiazolinon.

In einem zweiten Ausführungsbeispiel bestehen 86,8 Gew.% der wässrigen Lösung aus Wasser, 8 Gew.% der wässrigen Lösung aus der wässrigen Silikon-Emulsion, 3 Gew.% der wässrigen Lösung aus der Emulsion eines Polydimethylsiloxans, und 0,2 Gew.% der wässrigen Lösung aus der wasserbasierten Formulierung mit Methylisothiazolinon und Benzisothiazolinon.

Sowohl im Falle des ersten Ausführungsbeispiels als auch im Falle des zweiten Ausführungsbeispiels wird dabei als wässrige Silikon-Emulsion das Produkt WACKER^{®} HC 303 (Wacker Chemie AG), als Emulsion eines Polydimethylsiloxans das Produkt Tego^{®} Glide 490 (Evonik Resource Efficiency GmbH), und als wasserbasierte Formulierung mit Methylisothiazolinon und Benzisothiazolinon das Produkt ACTICIDE^{®} MBR1 (Thor GmbH) verwendet.

WACKER^{®} HC 303 ist eine extrem feinteilige, wässrige Silicon-Emulsion mit Teilchengrößen im Nanometerbereich, kann problemlos mit Wasser verdünnt oder in kaltgerührte wässrige Formulierungen eingearbeitet werden und ist hervorragend zur Hydrophobierung unterschiedlichster Stoffe geeignet.

Tego^{®} Glide 490 ist eine Emulsion eines Polydimethylsiloxans mit hohem Molekulargewicht. Es wirkt als Gleit- und Antiblockiermittel, bietet hervorragende Gleit- und Antiblockiereigenschaften in wässrigen Formulierungen, ist frei von Zinn und aromatischen Lösungsmitteln und kann in Wasser verdünnt werden.

Methylisothiazolinon und/oder Benzisothiazolinon wird nur zu einem Prozentsatz zwischen 0,01 Gew.% und 1 Gew.%, vorzugsweise von etwa 0,2 Gew.%, eingesetzt und hat die Funktion Wasser nicht brechen bzw. verfaulen zu lassen.

Das Gleitmittel des ersten und des zweiten Ausführungsbeispiels kann anhand des folgenden Verfahrens hergestellt werden:
Zuerst wird in einem Behältnis 88,8 Gew.% Wasser vorgelegt. Das Wasser wird mittels eines Rührgerätes oder händisch gerührt.

In weiterer Folge wird dem Wasser unter Rühren 8 Gew.% Wacker^{®} HC 303 beigemengt.

Anschließend werden 3 Gew.% Tego^{®} Glide 490 unter Rühren und mit langsamer Geschwindigkeit zugeführt.

Schließlich werden noch 0,2 Gew.% ACTICIDE^{®} MBR1 beigemengt.

Die so entstandene wässrige Lösung wird danach noch für etwa 60 Minuten mit geringer Geschwindigkeit gerührt.

## Patentansprüche

1. Gleitmittel zur Erhöhung der Gleitfähigkeit eines Sportgerätes, insbesondere eines Wintersportgerätes, umfassend eine wässrige Lösung umfassend
- eine wässrige Silikon-Emulsion,
- eine von der wässrigen Silikon-Emulsion verschiedene Emulsion eines Polydimethylsiloxans, sowie
- eine wasserbasierte Formulierung mit Methylisothiazolinon und/oder Benzisothiazolinon,
**dadurch gekennzeichnet, dass** eine mittlere Teilchengröße der wässrigen Silikon-Emulsion weniger als 100 nm, vorzugsweise weniger als 50 nm, beträgt, wobei die Teilchengröße mittels dynamischer Lichtstreuung bestimmt wird und die Mittelung der Teilchengröße durch Ermittlung des arithmetischen Mittels erfolgt.

2. Gleitmittel nach Anspruch 1, **dadurch gekennzeichnet, dass** eine mittlere Teilchengröße der wässrigen Silikon-Emulsion im Bereich von 15 nm bis 35 nm, vorzugsweise von 20 nm bis 30 nm, liegt.

3. Gleitmittel nach einem der Ansprüche 1 oder 2, **dadurch gekennzeichnet, dass** der Gefrierpunkt der wässrigen Lösung bei -5°C oder darüber, vorzugsweise im Bereich von -1°C bis 0°C, besonders bevorzugt im Bereich von -0,5°C bis 0°C, liegt.

4. Gleitmittel nach einem der Ansprüche 1 bis 3, **dadurch gekennzeichnet, dass** das Gleitmittel frei von Glykolen ist.

5. Gleitmittel nach einem der Ansprüche 1 bis 4, **dadurch gekennzeichnet, dass** das Gleitmittel frei von wachshaltigen Substanzen, insbesondere frei von jeglichen Erdölprodukten, ist.

6. Gleitmittel nach einem der Ansprüche 1 bis 5, **dadurch gekennzeichnet, dass** das Gleitmittel frei von Fluorcarbonen ist.

7. Gleitmittel nach einem der Ansprüche 1 bis 6, **dadurch gekennzeichnet, dass** das Gleitmittel frei von Paraffin ist.

8. Gleitmittel nach einem der Ansprüche 1 bis 7, **dadurch gekennzeichnet, dass** zumindest 50 Gew.%, vorzugsweise zumindest 85 Gew.%, der wässrigen Lösung aus Wasser bestehen.

## Claims

1. A lubricant for increasing the sliding capability of an item of sports equipment, in particular an item of winter sports equipment, comprising an aqueous solution comprising
- an aqueous silicone emulsion,
- an emulsion of a polydimethylsiloxane different from the aqueous silicone emulsion, and
- a water-based formulation having methylisothiazolinone and/or benzoisothiazolinone,
**characterized in that** a mean particle size of the aqueous silicone emulsion is less than 100 nm, preferably less than 50 nm, wherein the particle size is determined by means of dynamic light scattering and the averaging of the particle size is carried out on the basis of the arithmetic mean.

2. The lubricant according to Claim 1, **characterized in that** a mean particle size of the aqueous silicone emulsion is in the range of 15 nm to 35 nm, preferably of 20 nm to 30 nm.

3. The lubricant according to any one of Claims 1 or 2, **characterized in that** the freezing point of the aqueous solution is -5°C or above, preferably in the range of -1°C to 0°C, particularly preferably in the range of -0.5°C to 0°C.

4. The lubricant according to any one of Claims 1 to 3, **characterized in that** the lubricant is free of glycols.

5. The lubricant according to any one of Claims 1 to 4, **characterized in that** the lubricant is free of wax-based substances, in particular free of any petroleum products.

6. The lubricant according to any one of Claims 1 to 5, **characterized in that** the lubricant is free of fluorocarbons.

7. The lubricant according to any one of Claims 1 to 6, **characterized in that** the lubricant is free of paraffin.

8. The lubricant according to any one of Claims 1 to 7, **characterized in that** at least 50 wt.%, preferably at least 85 wt.% of the aqueous solution consists of water.

## Revendications

1. Agent de glissement pour augmenter le pouvoir glissant d'un article de sport, en particulier d'un article de sport d'hiver, comprenant une solution aqueuse comprenant
- une émulsion aqueuse de silicone,
- une émulsion d'un polydiméthylsiloxane différente de l'émulsion aqueuse de silicone, ainsi que
- une formulation à base d'eau avec de la méthylisothiazolinone et/ou de la benzisothiazolinone,
**caractérisé en ce qu'**une taille moyenne des particules de l'émulsion aqueuse de silicone est inférieure à 100 nm, de préférence inférieure à 50 nm, la taille des particules étant déterminée par diffusion dynamique de la lumière et le moyennage de la taille des particules étant effectué par détermination de la moyenne arithmétique.

2. Agent de glissement selon la revendication 1, **caractérisé en ce qu'**une taille moyenne des particules de l'émulsion aqueuse de silicone se situe dans la plage de 15 nm à 35 nm, de préférence de 20 nm à 30 nm.

3. Agent de glissement selon l'une des revendications 1 ou 2, **caractérisé en ce que** le point de congélation de la solution aqueuse est supérieur ou égal à -5 °C, de préférence compris entre -1 °C et 0 °C, plus préférentiellement compris entre -0,5 °C et 0 °C.

4. Agent de glissement selon l'une des revendications 1 à 3, **caractérisé en ce que** l'agent de glissement est exempt de glycols.

5. Agent de glissement selon l'une des revendications 1 à 4, **caractérisé en ce que** l'agent de glissement est exempt de substances contenant de la cire, en particulier exempt de tout produit pétrolier.

6. Agent de glissement selon l'une des revendications 1 à 5, **caractérisé en ce que** l'agent de glissement est exempt de fluorocarbures.

7. Agent de glissement selon l'une des revendications 1 à 6, **caractérisé en ce que** l'agent de glissement est exempt de paraffine.

8. Agent de glissement selon l'une des revendications 1 à 7, **caractérisé en ce qu'**au moins 50 % en poids, de préférence au moins 85 % en poids, de la solution aqueuse sont constitués d'eau.
